Europäisches Patentamt

European Patent Office

Office européen des brevets

(11) Publication number: **0 370 586**
**A2**

# (12) EUROPEAN PATENT APPLICATION

(21) Application number: **89202991.9**

(22) Date of filing: **23.11.89**

(51) Int. Cl.⁵: **H01B 1/24**

(30) Priority: **25.11.88 GB 8827569**

(43) Date of publication of application:
**30.05.90 Bulletin 90/22**

(84) Designated Contracting States:
**BE CH DE ES FR GB IT LI NL SE**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Brokken-Zijp, Josephina Cornelia Maria**
**Badhuisweg 3**
**NL-1031 CM Amsterdam(NL)**
Inventor: **Noordam, Arend**
**Badhuisweg 3**
**NL-1031 CM Amsterdam(NL)**
Inventor: **Groenewoud, Wilhelmus Maria**
**Badhuisweg 3**
**NL-1031 CM Amsterdam(NL)**
Inventor: **Klaren, Cornelis Hubertus Joseph**
**P.O. Box 30 1348 Ottignies**
**Lauvain-la-Neuve(BE)**

(74) Representative: **Aalbers, Onno et al**
**P.O. Box 302**
**NL-2501 CH The Hague(NL)**

(54) **Conductive thermosetting resins.**

(57) The invention relates to a curable composition comprising a thermosetting resin, from 0.02 to 1.7 %vol of carbon black, which is present in the composition as a homogeneous dispersion of particles substantially having a diameter of less than $10^{-6}$ m, and a curing agent, the latter having a surface tension at the curing temperature of at least 33 or at most 23 mN.m⁻¹.

EP 0 370 586 A2

## CONDUCTIVE THERMOSETTING RESINS

This invention is concerned with electrically conductive thermosetting resins obtainable upon curing compositions comprising carbon black particles. It is well known that incorporation of carbon black into thermoplastic or thermoset polymers imparts electrical conductivity. Many of such compositions are nowadays available in the market. However, fairly large amounts, say 7 or 10 %vol of carbon black are required to achieve sufficient conductivity and such relatively large amounts of carbon black are detrimental in the sense that they emphasize the character of carbon black as a filler thus adversely affecting the mechanical strength and modulus of the polymers.

The present invention sets out to provide a solution for the problem of creating adequate electrical conductivity into thermoset polymers at carbon black levels which are much less than those presently employed, in particular levels of less than 1.7 %vol. It has been found that this problem may be solved by careful selection of curing agents which must satisfy defined criteria set to surface tension. In addition, it has been found that the degree of dispersion of the carbon black particles is critical.

The present invention is concerned with a curable composition comprising a thermosetting resin, from 0.02 to 1.70 %vol of carbon black which is present in the composition as a homogeneous dispersion of particles substantially having a diameter of less than $10^{-6}$ m, and a curing agent, the surface tension of the curing agent at the curing temperature being either at least 33 or at most 23 mN.m$^{-1}$.

One of the surprising aspects of the present invention is that it is easy to achieve high levels of conductivity, viz. a conductivity of at least $10^{-7}$ (ohm-cm)$^{-1}$ at carbon black levels which can be as small as 0.4 or even 0.05 %vol. Whilst the Applicant does not wish to be bound by any theoretical explanation of this surprising effect it is believed that the aforesaid surface tension criteria are related to the interfacial energy between curing agent molecules and carbon black, particles, that energy passing a defined critical value thus creating a driving force which causes the carbon black, particles to form a network structure of coagulated particles in the resin matrix.

Suitable thermosetting resins that may be employed in this invention are for example polyester resins, unsaturated polyester, resins, polyurethanes, phenolformaldehyde resins and epoxy resins. The latter are preferred. Of special interest are di-and polyglycidyl ethers of dihydric phenols, preferably 2,2-di(4-hydroxyphenyl)propane.

Carbon black grades for electrical conducting resins are known in the market. Any one of them can be employed, albeit there is a preference for the commercial grades Ketjenblack EC-2000 (Ketjenblack EC-2000 is a Registered Trade Mark) and Gulf AB 50-P (Gulf AB 50-P is a Registered Trade Mark). Both grades are available in the form of very fine particles having a maximum diameter in the order of 20 to $50 \times 10^{-9}$ m. Upon dispersing such fine powders into the curable resins - which normally have a fairly large viscosity -there is a tendency towards agglomeration which results in the formation of significantly larger particles, i.e. having a diameter significantly above $20 \times 10^{-6}$ m. However, it is of critical importance to avoid such agglomeration when preparing the curable compositions in accordance with this invention and for this reason the invention sets a limiting value for the degree of dispersion of the carbon black particles in the resin matrix. As set out herein, one should achieve a homogeneous dispersion of particles substantially having a diameter of less than $10^{-6}$ m. Herein the term "substantially" stands for at least 70%, preferably at least 90% of the total number of particles. Useful technology to establish the dispersion quality is by microscopic inspection, $10^{-6}$ m being the detection limit in optical microscopy. The technology for achieving the desired dispersion quality is known in the art. The preferred method is to incorporate the carbon black particles into the resin matrix in the absence of curing agent under high shear stirring conditions. Incorporation of carbon black into the curing agent and then mixing with resin is another possibility.

Suitable curing agents can be selected from the large variety of curing agents known in the art.

The determination of the surface tension (in mN.m$^{-1}$) of the curing agent is carried out at the temperature at which the agent is used for curing the thermosetting resin. A reduction in the determination temperature is related to a decrease of surface tension. Methods for determining surface tension are known per se. An excellent method, which is recommended for use in this invention, is the spinning drop method employing an analyser described by J.J. Elmendorp in Pol. Eng. and Sci., 26, p. 15 et seq (1987); this equipment allows easy heating of the measurement cell. Alternatively the surface tension can be calculated in accordance with the method disclosed in "Handbook of chemical property estimation methods", McGraw-Hill Book Co., NY, (1982)".

Preferred curing agents are selected from amines, preferably primary diamines and di- or triamines having one secondary amine group, the other groups being primary.

Excellent results have been obtained with di(4-aminophenyl)methane (DDM), aminoethane which may be complexed with a strong Lewis acid such as $BF_3$ (EAB), 1-methyl-2,4-diamino-3,5-diethylbenzene (DETDA), 2,2-di(4-aminophenyl)propane (pDMDDM), 2,2-di(3-aminophenyl)propane (mDMDDM), hexahydrophthalic anhydride (HHPA), N-phenyl, 1,3-diamine-ethylaminopropane (EPIKURE 112) (EPIKURE is a Registered Trade Mark), di(3-methyl, 4-aminocyclohexyl)methane (EPIKURE 113), a curing agent based upon a 50:50 wt mixture of the latter two curing agents which mixture is sold under the trade name EPIKURE 114 and di(4-aminophenyl)methane (EPIKURE 160).

Examples of curing agents which cannot be used in this invention since they do not satisfy the surface tension criterion are 1-aminomethyl, 1-methyl, 3-amino, 4-methylcyclohexane (IPD), EPIKURE 205, and di(4-cyclohexyl)methane (PACM-20).

The table below lists various agents, together with their surface tension ($\gamma$) in $mN.m^{-1}$ and their determination (=curing) temperatures (T), in degrees Celsius.

TABLE I

| agent | $\gamma$ | T |
|---|---|---|
| DDM | 45.3 | 100 |
| DETDA | 41 | 80 |
| pDMDDM | 44 | 100 |
| mDMDDM | 44 | 130 |
| HHPA | 10.0 | 20 |
| EPIKURE 112 | 36.2 | 20 |
| EPIKURE 113 | 34.7 | 60 |
| EPIKURE 114 | 35.0 | 20 |
| EAB | 10 | 130 |
| IPD* | 31.2 | 20 |
| PACM-20* | 32.5 | 100 |

* not suitable

Optimum results are obtained in this invention when the surface tension of the curing agent is at least 35 or at most 21 $mnN.m^{-1}$. Preferred carbon black levels are from 0.1 to 0.6 %vol.

The invention is also concerned with the products resulting upon curing the novel compositions set out hereinbefore. The thermoset products can be employed in various fields where electrical application is important, such as electronic adhesives, antistatic floorings, antistatic coatings, paints and stoving enamels, conductive plates, strips, film, boards, laminates, microchips, profiles, pipes, ducts, rods and the like. Any one of such applications may be combined with the well-known use of fibre-reinforcement to increase the strength of the various articles of manufacture.

## EXAMPLES

Using a Sussmeyer Dispermix DL at a rate of 4000 rpm Ketjenblack EC-2000 (KEC) or Gulf AB-50P (AB) was dispersed in EPIKOTE 828 (EPIKOTE is a Registered Trade Mark), which is a commercial diglycidylethers of 2,2-di(4-hydroxyphenyl)propane, having an epoxy equivalent weight of 183 $g.mol^{-1}$. Samples of the dispersion were subjected to microscopic inspection to establish that the maximum carbon black particle size in the dispersion was substantially less than $10^{-6}$ m. By hand-stirring effective amounts of various curing agents were incorporated into the resin mix.

The products were cured at the temperatures indicated in Table II and conductivity was measured at room temperature. As test specimen round disks were employed, having a diameter of $5 \times 10^{-2}$ m and a thickness of $1 \times 10^{-3}$ m. Silver was deposited at both surfaces of the disks. At less than $10^{-7}$ $ohm^{-1}.cm^{-1}$ a guarded electrode was employed to minimize the influence of surface conductivity.

The results obtained at varying levels of carbon black the results obtained are represented in Table II. Conductivity (C) is marked in $(ohm.cm)^{-1}$, carbon black (CB) level is marked in %vol.

TABLE II

| curing agent | curing temp. | CB | conc | C | conc | C | conc | C | conc | C |
|---|---|---|---|---|---|---|---|---|---|---|
| DDM | 100 | KEC | 0.07 | $8\times10^{-7}$ | 0.10 | $7\times10^{-6}$ | 0.13 | $2\times10^{-5}$ | 0.26 | $1\times10^{-4}$ |
| pDMDDM | 110 | KEC | 0.25 | $2\times10^{-4}$ | 0.5 | $9\times10^{-4}$ | 0.7 | $2\times10^{-3}$ | | |
| mDMDDM | 110 | KEC | 0.25 | $2\times10^{-4}$ | 0.5 | $7\times10^{-4}$ | 0.7 | $1\times10^{-3}$ | | |
| EPIKURE 160 | 20 | KEC | 0.25 | $8\times10^{-6}$ | 0.5 | $1\times10^{-4}$ | | | | |
| DETDA | | | 0.25 | $5\times10^{-7}$ | 0.5 | $3\times10^{-4}$ | 0.8 | $3\times10^{-3}$ | | |
| EPIKURE 114 | 20 | KEC | 0.25 | $2\times10^{-10}$ | 0.5 | $2\times10^{-5}$ | | | | |
| EPIKURE 112 | 20 | KEC | 0.37 | $>10^{-8}$ | 0.5 | $>10^{-8}$ | 0.8 | $>10^{-7}$ | | |
| EPIKURE 113 | 60 | KEC | 0.62 | $1\times10^{-8}$ | | | | | | |
| EAB | 130 | KEC | 0.18 | $1\times10^{-4}$ | 0.35 | $1\times10^{-3}$ | 0.6 | $1\times10^{-3}$ | | |
| HHPA | 130 | KEC | 0.25 | $2\times10^{-4}$ | 0.05 | $3\times10^{-4}$ | 0.8 | $1\times10^{-3}$ | | |
| PACM-20* | 100 | KEC | 2.0 | $6\times10^{-13}$ | 2.2 | $2\times10^{-12}$ | 2.6 | $1\times10^{-3}$ | | |
| IPD* | 20 | AB | 0.8 | $1\times10^{-17}$ | 1.5 | $1\times10^{-17}$ | 1.8 | $1\times10^{-17}$ | 2.0 | $1\times10^{-7}$ |
| EPIKURE 205* | 20 | KEC | 0.25 | $1\times10^{-17}$ | 0.5 | $1\times10^{-17}$ | 0.75 | $1\times10^{-15}$ | | |

* for comparison

When converting the data of Table II into a graphical representation whilst vertically setting out conductivity against horizontally the various carbon black levels one obtains for all curing agents except IPD, an S-shaped curve, starting and ending almost horizontally at low, respectively high conductivity, and a steep, almost vertical rise in the middle sections. The horizontal ending of the curve at high conductivity levels means that no or only a negligible improvement in conductivity can be obtained by increasing the carbon black content in the compositions beyond the levels marked in the right-hand side of Table II. This is another surprising finding of the present invention. In the exceptional case of IPD the horizontal extrapolation only starts at a carbon black level of about 2.8 %vol thus showing that IPD is not a preferred curing agent. In the said graph the points on the curves marking the beginning of the steeply rising section can be referred to as "percolation thresholds". One finds those points at the following carbon black levels in %vol:

| | |
|---|---|
| DDM | 0.10 |
| DETDA | 0.17 |
| EAB | 0.13 |
| pDMDDM | 0.12 |
| mDMDDM | 0.12 |
| EPIKURE 112 | 0.25 |
| EPIKURE 113 | 0.55 |
| EPIKURE 114 | 0.25 |
| EPIKURE 160 | 0.17 |
| PACM-20 | 2.0 |

## Claims

1. A curable composition comprising a thermosetting resin, from 0.02 to 1.7 %vol of carbon black, which is present in the composition as a homogeneous dispersion of particles substantially having a diameter of less than $10^{-6}$ m, and a curing agent, the latter having a surface tension at the curing temperature of at least 33 or at most 23 mN.m$^{-1}$.

2. A composition as claimed in claim 1, in which the thermosetting resin is an epoxy resin.

3. A composition as claimed in claim 2, in which the resin is a diglycidyl ether of a dihydric phenol.

4. A composition as claimed in claim 3, in which the phenol is 2,2-di(4-hydroxyphenyl)propane.

5. A composition as claimed in any one of claims 1 to 4, in which the curing agent is an amine.

6. A composition as claimed in claim 5, in which the curing agent is di(4-aminophenyl)methane.

7. A composition as claimed in any one of claims 1 to 6, which comprises from 0.1 to 0.6 %vol of carbon black.

8. A cured composition obtainable upon curing a composition as claimed in any one of claims 1 to 7.

9. A cured composition as claimed in claim 8, having a conductivity of at least $10^{-5}$ (ohm. cm)$^{-1}$.